# DEMANDE DE BREVET EUROPEEN

(11) **EP 0 566 482 A1**
(43) Date de publication de la demande: **20.10.1993**
(21) Numéro de dépôt: 93400965.5
(22) Date de dépôt: 13.04.1993
(51) Int. Cl.: G06F 15/40

(54) **Utilisation d'un protocole bidirectionnel de très haut niveau pour la communication entre un système hypermédia et une pluralité d'éditeurs**

(30) Priorité: 17.04.1992 FR 9204803
(71) Demandeur: BULL S.A., F-92800 Puteaux (FR)
(72) Inventeur: Sauter, Louis, F-91160 Longjumeau (FR)

(57) **Abrégé**

Un protocole (CP) bidirectionnel de très haut niveau est utilisé pour la communication entre un système hypermédia (HS) et une pluralité d'éditeurs (HSE, Ea, Eb, Ec, ...) interconnectés communiquant dans une hyperstructure. Ce protocole (CP) utilise un jeu de messages permettant à chaque éditeur de manipuler et gérer les contenus d'objets hypermédia appelés noeuds et il est, en outre, manipulé par les objets hypermédia et accessible à travers une interface programmatique.

## Description

La présente invention concerne l'utilisation d'un protocole de communication entre un système hypermédia et une pluralité d'éditeurs interconnectés communiquant dans une hyperstructure.

Dans son objet, un système hypermédia doit être organisé pour permettre de lier ensemble une pluralité de documents multimédia de sorte à autoriser à un utilisateur du système tout déplacement ou toute navigation d'un quelconque document à un autre sans ordre prédéterminé.

Jusqu'à présent les protocoles de communication utilisés dans de tels environnements étaient des protocoles de bas niveau, permettant certes la communication entre diverses applications mais imposant une programmation longue et complexe lorsqu'il était, entre autres, désiré augmenter le nombre de fonctionnalités des programmes que sont les éditeurs communiquant dans une hyperstructure ou encore pour permettre l'intégration d'un éditeur dans un environnement distribué. Ainsi est utilisé dans un environnement UNIX (marque déposée de UNIX System Laboratories Inc.) un protocole de type RPC ("Remo- te procédure Call") qui est un protocole de bas niveau. De même, sur PC fonctionnant dans un environnement hypermédia, par exemple avec Toolbook, est utilisé, sous WINDOWS, un protocole de bas niveau appelé DDE ("Dynamic Data Exchange" de Micro- soft). Pour favoriser la communication et la gestion des éditeurs, il est actuellement toujours nécessaire d'ajouter des parties de programmes à de tels protocoles de manière à proposer une utilisation à un niveau plus élevé permettant directement de gérer efficacement et simplement plusieurs éditeurs. En fait, les protocoles utilisés aujourd'hui ne sont pas spécifiquement orientés vers les éditeurs et par conséquent ne peuvent autoriser de manière aisée le rajout d'autres fonctionnalités auxdits éditeurs ou l'intégration d'autres éditeurs à un environnement existant. Bien au contraire de tels rajouts ou intégrations dans un environnement hypermédia avec les protocoles actuels ne sont réalisables qu'à l'unique et stricte condition d'y consacrer un temps exagérément long pouvant se mesurer en mois, voire en années.

La présente invention a pour but de remédier aux inconvénients inhérents à l'utilisation des protocoles de bas niveau de l'art antérieur et propose un protocole de communication qui permet de favoriser le développement d'applications multimédia interactives tout en évitant les difficultés de programmation liées à de tels développements.

Pour cela, un protocole bidirectionnel de très haut niveau est utilisé pour la communication entre un système hypermédia et une pluralité d'éditeurs interconnectés communiquant dans une hyperstructure, ce protocole utilisant un jeu de messages permettant à chaque éditeur de manipuler et gérer les contenus d'objets hypermédia appelés noeuds alors que ledit protocole est manipulé par les objets hypermédia et est accessible à travers une interface programmatique.

Ainsi, le protocole de communication selon l'invention permet, grâce à son très haut niveau, de gérer de manière aisée une pluralité d'éditeurs et donc d'applications communiquant dans une hyperstructure, d'ajouter des fonctionnalités hypermédia et d'intégrer de nouveaux éditeurs à l'hyperstructure existante dans des temps extrêmement réduits.

Les applications communiquant, de même que celles qui sont créées, dans cette hyperstructure peuvent ainsi avantageusement présenter toute information utilisant du texte, des graphiques, des animations, de l'audio et de la vidéo.

Ce protocole est de plus bidirectionnel, c'est-à-dire que fonctionnellement un dialogue est établi et que les messages peuvent effectuer un aller-retour entre un éditeur et le système hypermédia. Ainsi, des requêtes peuvent être adressées par le système hypermédia vers les éditeurs de même que des messages peuvent être transmis des éditeurs vers le système hypermédia. De manière générale, le système hypermédia permet de créer des collections de documents multimédia actifs et liés ensemble. Chaque document multimédia est associé à un objet hypermédia appelé un noeud. Dans le présent cas, ce n'est pas le système hypermédia lui-même qui manipule les contenus de ces noeuds, en effet la communication avec les différents éditeurs fonctionnant de manière indépendante est organisée par le protocole de communication qui utilise un jeu de messages tel qu'il facilite le développement d'applications multimédia interactives, en supprimant les problèmes de programmation longue et complexe habituellement rencontrés avec les protocoles de l'art antérieur. Le protocole est accessible à travers une interface programmatique qui facilite le dialogue avec les différents éditeurs, outils ou applications pour la création, la suppression et la manipulation des objets hypermédia.

De manière remarquable, le protocole utilisé est basé sur le principe d'un protocole de gestion de la transmission du type TCP/IP (Transmission Control Protocol/Internet Protocol).

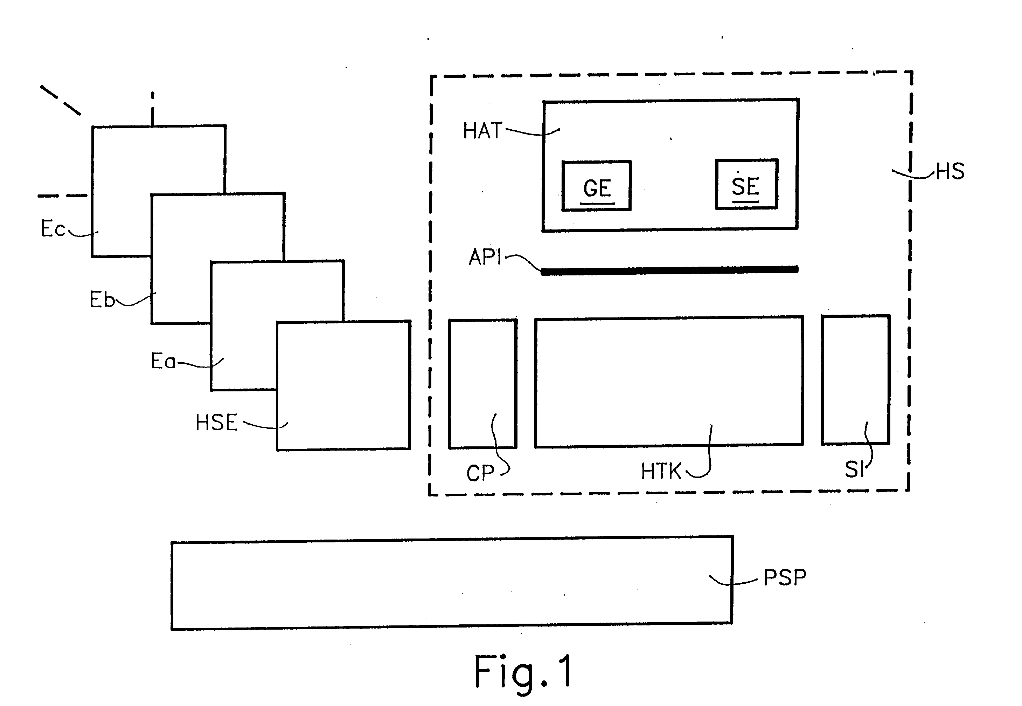

La description suivante en regard du dessin annexé, le tout donné à titre d'exemple non limitatif, fera bien comprendre comment l'invention peut être réalisée.

La figure unique propose un exemple d'architecture représentant un système hypermédia communiquant avec une pluralité d'éditeurs.

Un système hypermédia permet de créer des applications multimédia interactives qui consistent en la production de documents multimédia et en leur liaison ensemble. Ces documents multimédia peuvent être obtenus grâce à l'utilisation, par exemple, de programmes de dessin, d'outils audio ou vidéo, etc .... Les applications les plus complexes peuvent, pour être gérées simplement mais efficacement, nécessiter également la conception de petits programmes simples appelés habituellement "scripts" permettant notamment la modification ou la mise en mouvement d'objets hypermédia. De cette manière, les applications développées dans cet environnement hypermédia peuvent être utilisées pleinement sans qu'il soit nécessaire à l'utilisateur de posséder une connaissance approfondie du système.

Sur la figure, le système hypermédia HS est constitué de plusieurs composants. Une unité hypermédia appelée par la suite "boîte à outils" HTK fournit aux développeurs d'applications des moyens pour créer et manipuler des objets hypermédia durables et distribués, tels que des noeuds, des groupes, des ancres et des liens dont les définitions sont rappelées ci-après. Ces objets peuvent être définis en langage C++ et sont alors accessibles, soit en langage C++ soit par l'intermédiaire d'une interface programmatique en langage C.

Pour une meilleure appréhension de l'objet de l'invention suit une définition sommaire des différents objets hypermédia.

Un document hypermédia est en fait un ensemble de documents multimédia interconnectés. Chaque document multimédia est appelée un "noeud". Dans le système hypermédia HS qui est présentement décrit, il existe une différence entre la structure d'un noeud (qui gère les liens, les scripts, etc ...) et le contenu multimédia d'un noeud. Le système HS gère lui-même la structure du noeud alors que les contenus des noeuds sont gérés et manipulés par les différents éditeurs HSE, Ea, Eb, Ec, .... C'est le protocole de communication CP entre les éditeurs et le système HS qui permet avantageusement d'ouvrir ou fermer des documents, de retrouver des parties de contenus, etc ....

L"'ancre" est une autre entité hypermédia utilisée. Elle représente une partie sensible dite également zone sensible du contenu d'un noeud. Une ancre peut, par exemple, représenter un mot dans un texte ou une zone prédéfinie d'une image, ce mot ou cette zone réagissant lors d'une intervention d'un utilisateur, par exemple, sur la souris, le clavier ou autre.

Le "groupe" est une troisième entité hypermédia qui permet de construire une collection logique de noeuds. Plusieurs groupes peuvent être emboîtés, de même qu'un groupe peut contenir plusieurs autres non nécessairement emboîtés. Un noeud ou un groupe ne peut par contre appartenir qu'à un seul groupe à la fois.

Dans le système HS un "lien" peut servir de canal de communication entre plusieurs objets hypermédia (ancres, noeuds ou groupes). Ainsi, différents messages peuvent être envoyés par l'intermédiaire d'un lien, par exemple, un message d'activation aura pour effet d'ouvrir et de faire correspondre un objet de destination à un objet existant.

Noeuds, ancres et groupes peuvent chacun avoir un "script" associé. Ce script décrit la manière dont l'objet doit réagir lors de l'apparition de divers événements ou messages. Les scripts sont écrits dans un langage spécifique orienté-événements appelé dans la suite MT. Ce langage MT autorise un "auteur" ou un utilisateur à mettre en oeuvre des applications simples ou définissant des actions à exécuter sur les objets hypermédia concernés en réponse à différents messages. Ces scripts sont interprétés par l'interpréteur de scripts SI.

Comme cela a été exposé précédemment, le protocole de communication CP comportant un jeu de messages a été avantageusement défini pour permettre à différents éditeurs (HSE, Ea, Eb, Ec, ...) de gérer les contenus des noeuds. Le protocole CP est directement manipulé par les objets hypermédia et est accessible à travers une interface programmatique API.

Le système HS comporte également un outil auteur hypermédia HAT qui est une application écrite de X/Motif de l'OSF (Open Software Foundation) utilisant la boîte à outils HTK. L'outil HAT permet d'une part à un lecteur de dérouler sur un écran un hyper- document existant et d'autre part à un auteur de créer une nouvelle application hypermédia ou de modifier une application hypermédia existante. Les auteurs peuvent créer des groupes, des noeuds, des ancres et des liens, éditer des contenus de noeuds utilisant un éditeur (HSE, Ea, Eb, Ec, ...) conforme au protocole de communication CP et éventuellement écrire des scripts dans le langage MT. Des applications plus complexes peuvent être mises en oeuvre par l'intermédiaire de fonctions externes qui peuvent être appelées en utilisant le langage MT. L'outil HAT comporte en outre un éditeur de groupe GE et un éditeur de scripts SE.

Les éditeurs (HSE, Ea, Eb, Ec, ...) conformes au protocole CP sont utilisés pour gérer le contenu ou une partie du contenu de noeuds. Lorsqu'un nouveau noeud est créé, l'éditeur qui doit être utilisé pour gérer le contenu du noeud est spécifié, cet éditeur sera alors systématiquement utilisé chaque fois que ce noeud devra être visualisé. L'éditeur HSE est spécifiquement un éditeur multimédia X/Motif développé pour le système hypermédia HS. Une pluralité d'autres éditeurs Ea, Eb, Ec, ..., ont été étendus pour manipuler le protocole de communication CP. Les objets hypermédia et les documents manipulés par l'éditeur HSE sont stockés dans un moyen de stockage permanent PSP.

Les éditeurs peuvent présenter plusieurs niveaux de support du protocole CP, le support minimal consistant au traitement de deux requêtes (ouverture et fermeture d'un noeud) et à l'envoi de messages d'erreur pour toutes les autres requêtes.

Chaque structure de noeud hypermédia, manipulée par l'outil HTK, contient le nom de l'éditeur qui doit être utilisé pour l'édition du document correspondant.

Le système HS ne définit pas l'interface utilisateur pour les éditeurs. Les éditeurs sont libres d'utiliser tout style de présentation. Le format dans lequel les contenus sont stockés dépend de l'éditeur. Le système HS suggère le chemin d'accès au répertoire dans lequel le document peut être stocké. Ce trajet est communiqué à l'éditeur chaque fois que le document est ouvert. Un certain nombre d'extensions au protocole est préalablement organisé, mais des extensions définies par l'utilisateur sont également possibles.

Les applications multimédia interactives développées en utilisant le système hypermédia HS permettent, par exemple, de déclencher des actions en cli- quant la souris sur une partie prédéfinie d'une image. Ainsi, sur un document contenant une image qui représenterait un visage, un clic de la souris près de la bouche pourrait engendrer un message vocal. L'analyse succincte de cette opération pourrait être réalisée comme suit :
- l'éditeur détecte un clic de la souris dans une zone prédéfinie de l'image,
- il envoie l'information relative au clic de la souris vers l'objet hypermédia adéquat,
- le système HS gère l'événement en exécutant le script de cet objet hypermédia, ce qui a pour effet dans le présent exemple de déclencher le mes sage vocal.

Les parties de documents qui offrent la possibilité de déclencher des actions sont appelées des zones sensibles. L'ancre est l'objet hypermédia qui est associé à une zone sensible. A un événement (clic de la souris, frappe d'une touche d'un clavier, etc ...) qui sur'vient et qui est propre à une zone sensible correspond une information transmise à l'ancre concernée. Le système HS gère la sémantique (liens, scripts, ... associée aux ancres.

Chaque ancre possède un identificateur unique signifié par le système HS lors de la création de ladite ancre, cet identificateur sert de référence par la suite et doit être stocké par l'éditeur ensemble avec les autres propriétés relatives à la zone sensible concernée.

L'identificateur d'un noeud quant à lui est un pointeur d'une structure contenant l'identificateur unique du noeud concerné.

Les éditeurs peuvent gérer différents types de zones sensibles : une zone dans une image, une partie d'un texte, tout objet graphique dans un programme de dessin (incluant des groupes d'objets), des objets d'interaction spéciaux (bouton-poussoir, curseur d'un potentiomètre en audio, ...).

Les éditeurs peuvent, en outre, gérer trois modes de présentation visuelle de zones sensibles dans une image ou un texte : le mode caché, le mode affiché et le mode surintensifié. Par exemple, dans le mode affiché, un mot d'un texte sera entouré par un rectangle. Cependant, le style particulier de présentation dépendra du contenu et de l'éditeur.

De même, les éditeurs doivent supporter le mode auteur et le mode lecteur. Dans le mode auteur, l'utilisateur peut éditer les contenus d'un document, sélectionner des objets, ajouter ou supprimer des ancres, etc .... Dans le mode lecteur, la plupart des actions de l'utilisateur sont transmises sous forme de messages du protocole CP si elles apparaissent dans une région d'une ancre, sinon elles sont ignorées.

De manière remarquable un éditeur communique avec le système hypermédia selon le protocole utilisant principalement un jeu de cinq types de messages tels que :
- des messages de requêtes émis par le système hypermédia lorsqu'une quelconque action doit être exécutée par un éditeur,
- des messages de réponses, émis par les éditeurs répondant à un message de requête,
- des messages événementiels, émis par les éditeurs pour informer le système hypermédia de la survenance de divers événements (par exemple le cliquage d'une souris dans un ancre),
- des messages de menu, émis par les éditeurs pour informer le système hypermédia de la sélection par un utilisateur d'un menu prédéfini (par exemple la fermeture d'un noeud),
- des messages d'erreurs, émis par les éditeurs lors de l'apparition d'une erreur.

Ces différents types de messages seront explicités dans la suite.

Pour une application donnée, au tout début l'éditeur doit initialiser le protocole CP. Pour cela, le message doit préciser le contexte de l'application, le nom de l'éditeur, la fonction présentée par l'éditeur pour la manipulation des requêtes et le nombre maximal de connexions supportées par l'éditeur. Une fois initiali- sé, le protocole gérera les connexions et distribuera de manière adéquate automatiquement les requêtes qu'il recevra. De même, en fin de traitement l'éditeur devra envoyer un message de fermeture du protocole avant de sortir du système.

Une requête émise par le système hypermédia comporte deux arguments : la requête elle-même et un numéro de connexion qui lui est spécifique. Le même numéro de connexion et donc la même connexion devront être utilisés pour les messages de réponses ou d'erreurs propres à cette requête. Ega- lement, le numéro de connexion utilisé lors de l'ouverture d'un document devra être utilisé pour l'émission de messages événementiels ou de menu concernant ce document.

Lorsqu'un éditeur reçoit un message de requête émis par le système hypermédia, ce message est identifié grâce à un pointeur désignant.la structure spécifique de la requête qui est conforme au protocole CP. Les messages de réponses aux requêtes utilisent bien sûr des fonctions spécifiques et conformes au protocole CP, les réponses doivent être envoyées avant toute lecture d'une autre requête. Les différentes structures propres aux diverses requêtes utilisées sont ci-après définies.
- ouverture d'un noeud (tous les éditeurs utilisés dans le présent environnement doivent savoir gérer cette requête) : lorsqu'un document doit être ouvert le système HS envoie une telle requête à l'éditeur, indiquant l'identificateur de noeud, le chemin d'accès suggéré mais non imposé d'un répertoire existant dans lequel l'éditeur pourra placer les contenus d'un noeud, le nom du noeud et le mode supporté (lecture seulement ou création). Une fois que le document a été ouvert, l'éditeur envoie un message de réponse à la requête d'ouverture du noeud avec un numéro qui sera utilisé dans toute requête future concernant ce noeud. Si le document ne peut être ouvert, c'est alors le message d'erreur qui est émis.
- fermeture d'un noeud (tous les éditeurs utilisés dans le présent environnement doivent savoir gérer cette requête) : lorsqu'une telle requête est reçue, l'éditeur doit fermer le document associé au noeud concerné. Il peut sauvegarder le document à fermer lorsque cela est expressément requis, sinon, même si ce dernier a été modifié, il ne le sauvegarde pas.
- suppression d'un noeud (les éditeurs utilisés dans le présent environnement ne gèrent qu'optionnellement cette requête) : si un noeud a été supprimé, cette requête est émise lorsque les modifications apportées au document hypermédia ont été sauvegardées. Lorsqu'un noeud ouvert est supprimé, l'éditeur reçoit uniquement une requête de fermeture de noeud, si la suppression est confirmée par demande expresse de sauvegarde, alors, une requête de suppression de noeud est émise. Cependant, si l'éditeur a stocké les contenus du noeud dans le répertoire suggéré par le système HS, cette requête peut être ignorée : le système HS supprime lui-même ce répertoire avec tous ses contenus, sinon, l'éditeur doit supprimer les contenus de noeud.
- affichage d'un noeud (il est souhaitable que cette requête sache être gérée par l'éditeur, mais cela n'est pas obligatoire si tous les noeuds ouverts sont toujours affichés) : lorsque cette requête est reçue, l'éditeur doit afficher le document correspondant. Si le noeud est déjà affiché, cet appel a pour résultat de le mettre au premier plan.
- suppression de l'affichage d'un noeud (la gestion de cette requête est optionnelle) : lorsque l'affichage d'un document doit être supprimé, le système HS émet cette requête vers l'éditeur.
- sauvegarde d'un noeud, sauvegarde de tous les noeuds (cette requête doit savoir être gérée par tous les éditeurs supportant les objets "ancres") : le système HS peut demander un éditeur de sauvegarder le document en émettant cette requête. De manière à conserver une cohérence entre contenus de noeud et structure de noeud, les éditeurs qui manipulent les ancres doivent sauvegarder un noeud si, et seulement si, il reçoivent cette requête. Les éditeurs qui reçoivent une requête de sauvegarde de tous les noeuds exécutent cette sauvegarde pour tous les noeuds modifiés ouverts au moment de l'arrivée de ladite requête. En outre, si à un noeud est attachée la propriété "d'ignorer les modifications " et que cette propriété est vérifiée, l'éditeur ne doit pas sauvegarder le noeud sauf si une modification a été apportée aux ancres dans ce noeud. Si des ancres ont été modifiées ou créées, l'éditeur alors sauvegarde le noeud.
- impression d'un noeud (la gestion de cette requête est optionnelle) : le système HS peut demander à un éditeur d'imprimer le document en émettant cette requête.
- obtention d'une propriété d'un noeud (cette requête est optionnelle, cependant si elle n'est pas supportée par un éditeur un message d'erreur doit être émis) : le système HS peut envoyer cette requête pour obtenir la valeur d'une propriété du contenu d'un noeud. Si le noeud est trouvé et que la propriété est autorisée et mise en oeuvre par l'éditeur, ce dernier envoie la valeur de cette propriété avec le message de réponse associé, sinon il émet un message d'erreur.
- fixation d'une propriété d'un noeud (cette requête est optionnelle) : le système HS peut émettre cette requête pour changer la valeur d'une propriété du contenu d'un noeud. Si le noeud est trouvé et que la propriété et la valeur sont correctes, l'éditeur fixe la valeur de la propriété à sa nouvelle valeur, sinon, l'éditeur envoie un message d'erreur au système HS. Une description sommaire des diverses propriétés sera effectuée dans la suite. Il est à noter que toutes ces propriétés sont optionnelles et que l'éditeur peut ignorer ce type de requête.
- recherche d'un texte (cette requête est optionnelle, mais si elle n'est pas supportée, un message d'erreur doit être envoyé) : l'éditeur doit chercher une chaîne donnée dans les objets du type texte dans un document, en partant du début du premier objet de type texte. Une requête subséquente a pour effet de chercher la prochaine apparition de la channe courante. Une valeur de mode spécifie diverses options pour la recherche.
- création d'ancre (cette requête doit être gérée par tout éditeur qui supporte les ancres, le support pour une requête de création d'ancre dans un objet modifiable est optionnel) : pour créer une nouvelle ancre, le système HS émet cette requête vers l'éditeur. L'éditeur doit créer une zone sensible. Pour les objets de type texte, deux paramètres x et y donnent respectivement la position de début et de fin de la partie sensible. Pour les images, quatre paramètres sont utilisés, ces deux paramètres x et y et deux paramètres qui donnent la largeur et la hauteur de la zone sensible. Pour les objets audio et vidéo, deux paramètres supplémentaires concernant la première trame et la dernière trame définissent la première et la dernière trames pour lesquelles la zone sensible doit être active, c'est-à-dire le début et la fin dans le temps. Si la requête ne peut être satisfaite, l'éditeur doit envoyer un message d'erreur à l'outil HTK du système HS.
- suppression d'une ancre (cette requête doit être gérée par tout éditeur qui supporte les ancres) : cette requête est envoyée par le système HS à l'éditeur pour la suppression d'une ancre. L'éditeur doit supprimer l'objet associé à l'ancre (zone sensible, bouton, ...).
- affichage d'une ancre (cette requête est optionnelle) : avec cette requête, il est demandé à l'éditeur de visualiser une partie ou une page d'un document contenant la zone sensible correspondante. Ceci n'est utile que si le noeud n'est pas visible dans son intégralité.

La gestion des objets modifiables est effectuée à partir d'un certain nombre de requêtes prévues pour la manipulation d'objets à l'intérieur d'un document. Le système HS supporte quatre mécanismes qui permettent de se référer à ,des objets dans un document :
* l'identification d'objet modifiable : si l'éditeur gère des identificateurs durables pour ses objets, ces identificateurs peuvent être utilisés pour se référer à des objets dans les messages de requêtes. D'autres éditeurs peuvent fournir des identificateurs non durables en réponse à des requêtes pour des identificateurs d'objets.
* le nom : si l'éditeur gère des noms pour ses objets, il est alors référé à un objet modifiable avec un nom donné. Si un tel objet n'est pas trouvé, un message d'erreur doit être émis. Si plusieurs objets ont le nom et le type donnés, le résultat dépend de l'éditeur et doit être documenté. * la position : des objets peuvent être référencés en donnant une position dans le document. Le premier objet ayant cette position est utilisé. S'il n'y a pas un tel objet, un message d'erreur est envoyé.
* l'ancre : permet de se référer à l'objet contenant cette ancre. Cet objet doit être du type sensible (zone sensible, bouton, ...).
- création d'objets modifiables (cette requête est supportée optionnellement, si elle n'est pas supportée, un message d'erreur doit être émis) : l'éditeur doit, si possible, créer un objet avec des propriétés implicites (par défaut) et envoyer l'identificateur de l'objet créé au système HS en utilisant un message de réponse, sinon il envoie un message d'erreur au système HS.
- insertion (cette requête est optionnelle) : il est demandé à l'éditeur d'insérer le contenu d'un "presse-papier" à une position donnée.
- effacement/coupe/copie (ces requêtes sont optionnelles) : l'objet référencé est effacé, coupé ou copié.
- sélection d'objet (cette requête est optionnelle) : l'éditeur doit ou ne doit pas sélectionner l'objet référencé.
- positionnement du curseur (cette requête est optionnelle) : l'éditeur doit placer le curseur d'insertion de manière à le faire apparaître sur l'objet référencé.
- sélection de tous les objets (cette requête est optionnelle) : l'éditeur doit sélectionner tous les objets d'un certain type dans une zone définie.
- sélection d'un texte (cette requête est optionnelle) : l'éditeur doit sélectionner un texte dans une zone donnée.
- alignement des objets (cette requête est optionnelle) : l'éditeur doit aligner (cadrer) les objets sélectionnés.
- obtention de propriétés d'un objet modifiable (cette requête est optionnelle, cependant si elle n'est pas supportée, un message d'erreur doit être envoyé) : les valeurs des propriétés d'un objet modifiable sont gérées par l'éditeur. Le système HS peut envoyer cette requête pour obtenir la valeur d'une propriété d'un objet. Si l'objet référencé est trouvé dans le document et si la propriété est autorisée et mise en oeuvre par l'éditeur pour cet objet, l'éditeur envoie la valeur de la propriété avec un message de réponse, sinon il envoie un message d'erreur au système HS.
- fixation de propriétés d'un objet modifiable (cette requête est optionnelle) : le système HS peut envoyer cette requête pour changer la valeur d'une propriété d'un objet modifiable. Si l'objet référencé est trouvé dans le document et que le type et la valeur de la propriété sont correctes pour cet objet, l'éditeur fixe la valeur de la propriété à la nouvelle valeur, sinon il envoie un message d'erreur au système HS.

Les neuf messages suivants concernent les requêtes de gestion de menu. Ces requêtes permettent à des scripts de modifier la barre de menu de l'éditeur pour chaque document, elle sont cependant toutes optionnelles. Un paramètre dit de niveau autorise la modification en mode lecteur, en mode auteur, ou les deux à la fois.

- addition au menu : l'éditeur doit ajouter un menu déroulant à la barre de menu. Si le paramètre de position est différent de zéro, le menu est placé à la position donnée, décalant les menus existants si cela est nécessaire, sinon il est placé à droite des menus existants.
- addition d'une partie de menu : l'éditeur doit ajouter une partie de menu à un menu existant. Si le paramètre de position est différent de zéro, la partie de menu est placée à cette position, sinon elle est placée au-dessous des parties de menu existantes. Le nom d'une partie de menu peut être utilisé dans des scripts comme nom de message d'événements :
- retrait d'un menu : l'éditeur doit retirer un menu existant de la barre de menu.
- retrait d'une partie de menu : l'éditeur doit retirer une partie de menu d'un menu existant.
- activation/désactivation d'un menu/d'une partie de menu : l'éditeur doit rendre disponible ou indisponible (griser) le menu référencé ou la partie de menu référencée.
- cochage/non cochage (petite marque faite à côté du menu) d'une partie de menu : l'éditeur doit ou ne doit pas contrôler la partie de menu référencée.
- addition/retrait d'un accélérateur : l'éditeur doit ajouter ou retirer un accélérateur à la partie de menu référencée.
- restauration de la barre de menu : l'éditeur doit replacer la barre de menu dans son état normal.
- masquage/affichage de la barre de menu : l'éditeur doit masquer ou afficher la barre de menu.
- fixation d'une propriété du système (cette requête est optionnelle) : ce message et envoyé à tous les éditeurs quand une propriété du système est changée. Le changement résultant doit être propagé et être reproduit dans tout document ouvert par les éditeurs.
- messages (cette requête est optionnelle) : le système HS envoie une requête demandant à l'éditeur d'afficher un message. Le système HS n'attend pas de message de réponse. L'éditeur est alors chargé d'afficher et d'enlever les messages.
- commandes d'exécution (cette requête est optionnelle, si elle n'est pas supportée, un message d'erreur doit être émis) : cette requête, envoyée par le système HS à l'éditeur, contient une chaîne à traiter comme une série de commandes. Le contenu de la chaîne et la manière dans laquelle elle est traitée dépendent de l'éditeur.
- traitement d'un événement de type menu (nécessaire seulement pour les éditeurs qui émettent des messages d'événements de type menu) : le comportement par défaut du système HS pour ce type de message est de renvoyer une requête correspondante. Le traitement de ce message est dépendant de l'éditeur.
- synchronisation (tous les éditeurs conformes au protocole CP doivent gérer cette requête) : l'éditeur doit émettre une réponse "vide", ceci autorise la synchronisation entre le système HS et l'éditeur.
- obtention de la position d'un pointeur (cette requête est optionnelle, mais si elle n'est pas supportée, un message d'erreur doit être émis) : lorsqu'il reçoit cette requête, l'éditeur doit répondre en donnant la position actuelle du pointeur par rapport à la fenêtre contenant le document référencé. Si le document n'est pas affiché, l'éditeur doit envoyer un message d'erreur.
- effet spécial (cette requête est optionnelle) : après réception de cette requête, le prochain document ouvert doit être affiché dans la fenêtre utilisée dans le document référencé. Un effet spécial optionnel doit être utilisé.
- verrouillage/déverrouillage d'un éditeur (cette requête est optionnelle) : permet de verrouiller ou déverrouiller l'éditeur. Quand l'éditeur est verrouillé il doit attendre une requête de déverrouillage avant de traiter une quelconque demande d'un utilisateur.
- enregistrement (cette requête est optionnelle) : lorsque l'éditeur est en mode enregistrement, il doit envoyer au système HS des messages qui décrivent chaque action d'un utilisateur (mouvement d'un objet, propriété modifiée, etc ...). Ceci génère automatiquement un script qui va reproduire la séquence d'actions.

Les messages de réponses des éditeurs aux messages de requêtes du système HS ont été examinés au cours de la description desdits messages de requêtes. Il doit être cependant noté que les messages de réponses ou d'erreurs doivent obligatoirement être transmis avant toute lecture d'une requête suivante.

Concernant les messages d'événements, les ancres (associées aux zones sensibles) et les noeuds (associés aux documents) peuvent avantageusement posséder des scripts qui peuvent contenir des gestionnaires qui sont des petits programmes de traitement des différents événements susceptibles de survenir. L'éditeur doit ainsi envoyer les messages d'événements au système HS de sorte que les événements soient traités de manière appropriée.

Lorsqu'un éditeur est en mode lecteur, tout message d'événement (relatif par exemple à la souris ou au curseur d'insertion) impliquant une zone sensible doit être transmis à l'ancre correspondante.

Outre tous ces messages d'événements, l'éditeur peut envoyer des messages spécifiques d'événements notifiant une modification de la configuration, qui doivent être traités par le script du noeud, chaque fois que la fenêtre contenant le noeud est déplacée, redimensionnée, mise au premier-plan ou au dernier- plan.

Lorsqu'un message d'événement est envoyé, l'identificateur de noeud émis est celui transmis à l'éditeur au moment de l'ouverture du document. L'identificateur d'ancre doit être fixé à zéro si le message d'événement concerne le noeud, sinon il est conservé à la valeurfournie lors de la création de l'ancre, le message étant par conséquent aiguillé vers le noeud dans le premier cas ou vers l'ancre correspondante dans le dernier cas.

Les messages de menu sont envoyés vers la boîte à outils HTK du système HS lorsque l'utilisateur sélectionne une partie de menu. Dans la plupart des cas, ces messages sont optionnels, mais la transmission de tels messages permet aux auteurs d'applications de personnaliser et de créer sur mesure lesdites applications.

De manière à maintenir la cohérence entre les contenus de noeud et la structure de noeud hypermédia, certaines fonctions d'éditeur ne doivent être exécutées qu'après réception du message de requête émis par le système HS. Ce sera toujours le cas pour la fermeture d'un noeud. Si l'éditeur supporte des ancres ce sera également le cas pour la sauvegarde d'un noeud. Pour ce type de fonctions, l'éditeur doit envoyer un message de menu au système HS. La procédure par défaut du système HS inclut un renvoi d'un message de requête correspondant. Si par contre un gestionnaire est trouvé pour le traitement du message de menu, alors ce gestionnaire est utilisé et la procédure par défaut n'est pas exécutée.

Cependant, certains messages de menu exigent un traitement spécial de la part du système HS, ces messages ayant des structures spéciales. Les autres messages de menu utilisent la structure de message générale qui contient le nom du message de menu. Ce nom découle habituellement du libellé de la partie de menu.

Aucune partie de menu spécifique du système HS n'est obligatoire si l'éditeur n'a pas à gérer d'ancres.

Pour ces messages, l'identificateur de noeud émis est celui transmis à l'éditeur lors de l'ouverture du document. L'identificateur d'ancre doit être fixé à zéro, si le message de menu concerne le noeud, sinon il est conservé à la valeur fournie lors de la création de l'ancre.
- suppression de l'affichage d'un noeud (message optionnel) : lorsqu'une partie de menu concernant la suppression de l'affichage d'un noeud est sélectionnée par l'utilisateur, ce message doit être envoyé par l'éditeur.
- fermeture d'un noeud (message optionnel) : lorsqu'une partie de menu concernant la fermeture d'un noeud est sélectionnée par l'utilisateur, ce message doit être envoyé par l'éditeur. Si le noeud peut être fermé, le système HS enverra alors une requête de fermeture de noeud à l'éditeur.
- sauvegarde d'un noeud (message optionnel) : lorsqu'une partie de menu concernant la sauvegarde d'un noeud est sélectionnée par l'utilisateur, ce message doit être envoyé par l'éditeur. Si cela est possible, alors le système HS enverra une requête de sauvegarde de noeud à l'éditeur.
- suppression d'un noeud (message optionnel) : lorsqu'une partie de menu concernant la suppression d'un noeud est sélectionnée par l'utilisateur, ce message doit être envoyé par l'éditeur. Si cela est possible, alors le système HS enverra une requête de suppression de noeud à l'éditeur. Le système HS supprimera le répertoire contenant les contenus de document.
- création d'ancre (message obligatoire pour les éditeurs supportant les ancres) : l'éditeur est chargé de fournir l'interface utilisateur pour la création d'ancres. Quand une nouvelle ancre doit être créée, l'éditeur envoie ce message. En réponse à ce message, le système HS crée (si cela est possible) une nouvelle ancre et envoie une requête de création d'ancre à l'éditeur. Par contre, en cas d'insuccès, une requête de création d'ancre avec un identificateur d'ancre égal à zéro est envoyée à l'éditeur. Typiquement et de manière avantageuse, la création d'une zone senbible est ainsi effectuée :
   * l'utilisateur indique les repères d'une région du document choisie comme zone sensible, qui peut être par exemple une zone rectangulaire dans une image, une partie du texte, etc....
   * l'éditeur envoie au système HS un message de menu relatif à la création d'une ancre.
   * le système HS crée une nouvelle ancre et envoie à l'éditeur un message de requête de création d'ancre. Dans le cas où l'ancre ne peut être créée, l'identificateur d'ancre est fixé à zéro.
   * si l'éditeur reçoit un message de requête valide de création d'ancre, il met à jour son contenu pour inclure la nouvelle ancre, sinon il exécute les procédures appropriées.

Le système HS peut créer des ancres sans que l'utilisateur agisse directement, en envoyant une requête de création d'ancre. L'éditeur répond à ce message de la même manière que dans le cas précédent quand l'utilisateur avait fait lui-même ce choix.
- suppression d'une ancre (message obligatoire pour les éditeurs supportant les ancres) : lorsqu'un objet sensible doit être supprimé, l'éditeur doit envoyer ce message. Si l'ancre peut être supprimée, le système HS envoie une requête de suppression d'ancre à l'éditeur. Typiquement et de manière avantageuse la suppression d'une ancre est ainsi effectuée :
   * l'utilisateur sélectionne la zone sensible à supprimer.
   * l'éditeur envoie au système HS un message de menu de suppression d'ancre.
   * si la suppression est possible, le système HS supprime l'ancre et envoie à l'éditeur une requête de suppression d'ancre, sinon la suppression est ignorée.
   * lorsque l'éditeur reçoit la requête de suppression d'ancre, il supprime l'objet correspondant du document. Le système HS peut supprimer des ancres sans que l'utilisateur agisse directement, en envoyant une requête de suppression d'ancre. L'éditeur répond à ce message de la même manière que dans le cas précédent quand l'utilisateur avait fait lui-même ce choix.
- sélections (message obligatoire pour les éditeurs supportant les ancres) : l'éditeur doit fournir un mécanisme à l'utilisateur pour sélectionner un noeud ou un objet sensible. Le style de sélection dépend de l'éditeur. L'éditeur envoie alors ce type de message. Pour la sélection d'un noeud, l'identificateur d'ancre doit être fixé à zéro. De manière typique, ce type de message est utilisé pour créer des liens.
- Editions de scripts (message obligatoire pour les éditeurs supportant les ancres) : chaque objet actif est associé à un script en langage MT. L'éditeur peut envoyer ce message en réponse à la sélection d'un utilisateur. Le système HS appelle alors l'éditeur de scripts pour éditer le script de l'objet spécifié.
- Visualisation d'information d'un objet (message obligatoire pour les éditeurs supportant les ancres) : la procédure implicite pour ce message de menu est que la boîte à outils HTK du système HS présente sur l'écran une boîte de dialogue permettant de visualiser et de modifier diverses propriétés de l'objet désigné.
- Messages de menu spécifiques d'un éditeur (message optionnel) : l'éditeur peut envoyer des messages de menu pour diverses parties de menu spécifiques de l'éditeur en utilisant ce type de message dans lequel le paramètre de nom peut être utilisé dans un script pour définir un gestionnaire de message de menu. Si aucun gestionnaire n'est trouvé, la procédure par défaut dans ce type de message est que le système HS renvoie à l'éditeur une requête de gestion de menu. Les paramètres de nom de ce type de message doivent être donnés dans la documentation spécifique de l'éditeur.
- Messages de menu définis par l'utilisateur (message optionnel) : les éditeurs peuvent supporter des menus et des parties de menu additionnels définis par les requêtes relatives au menu décrites ci-avant. Les éditeurs doivent envoyer ces messages de menu définis par l'utilisateur lorsque l'une des parties de menu est sélectionnée en utilisant ce type de message dans lequel le paramètre de nom est le nom de la partie de menu tel que défini pour la requête d'addition d'une partie de menu. Le nom peut être utilisé dans des scripts pour définir un gestionnaire du message de menu. Si aucun gestionnaire n'est trouvé, la procédure par défaut dans ce type de message est de ne rien faire.

En outre, tous les éditeurs conformes au protocole CP doivent envoyer des messages d'erreurs lorsqu'ils reçoivent une requête attendant une réponse et qui n'est pas gérée par l'éditeur. Les éditeurs qui supportent des ancres doivent envoyer un message d'erreur lorsqu'une requête de création d'ancre est en échec. Dans les autres cas, les messages d'erreurs sont optionnels. Dans les messages d'erreurs le paramètre "requête" indique, quand c'est le cas, le type de requête qui a provoqué l'erreur et le paramètre "raison" fournit la raison de l'erreur. Quelques exemples d'erreurs courantes sont ici mentionnées : mauvaise ancre, mauvais document, mauvaise longueur, mauvaise correspondance, mauvais objet, mauvaise propriété, mauvaise requête, mauvaise valeur, objet non mis en oeuvre, ....

D'autre part, et comme cela a été exprimé précédemment, un grand nombre de messages utilisés par le protocole CP contient des propriétés caractérisées par un type de propriété et une valeur ayant une structure prédéfinie. Pour une meilleure appréhension du contexte dans lequel évolue l'invention, une description de quelques propriétés est fournie dans la suite. Il est à remarquer que toutes ces propriétés sont optionnelles, l'éditeur pouvant ignorer toute requête de fixation de propriété et pouvant répondre par un message d'erreur en cas de requête d'obtention de propriété. Certaines propriétés sont prédéfinies et leurvaleur peut être obtenue ou fixée de manière simple. Il est en outre possible d'étendre le nombre de propriétés. Les propriétés additionnelles peuvent être gérées par le protocole CP. Pour cela, le type de propriété qui doit être dans ce cas utilisé est supérieur à un nombre prédéfini (par exemple 127). La valeur pour ces propriétés est une valeur d'extension qui contient le type et la valeur réelle. Ainsi, un objet modifiable peut se voir ajouter une propriété additionnelle définie par son nom (auquel correspond une valeur entière) et un nombre .qui sera le nombre juste supérieur au nombre de propriétés existant déjà. Le système HS doit alors définir une fonction d'extension qui peut être appelée en langage MT et envoyer un message de requête associé alors que.l'éditeur concerné sera chargé de gérer la requête après vérification éventuelle du type de données.

Les propriétés prédéfinies peuvent concerner le système, un noeud ou un objet (texte, image, graphique, groupe, bouton, curseurs et graduations de potentiomètres pour l'audio, audio, animation et vidéo, zone sensible pour le texte ou l'image, cible).

Les changements de valeur des propriétés de système sont transmis à tous les éditeurs déjà connectés et à chaque éditeur lors de sa connexion. Elles ont pour effet, soit de changer le comportement de l'éditeur, soit de spécifier de nouvelles valeurs de défaut pour de nouveaux objets. Les différents paramètres modifiables de ces propriétés sont les suivants :
- afficher (si vérifié) ou ne pas afficher les ancres,
- couleur de l'arrière-plan (fond) par défaut pour les nouveaux objets;
- si vérifié, image d'arrière-plan par défaut pour les nouveaux objets,
- centrage des nouveaux objets sur la souris,
- géométrie d'une fenêtre avec un outil de dessin,
- géométrie d'une fenêtre pour la sélection de fontes,
- liste de fontes par défaut pour les nouveaux objets,
- couleur du premier plan par défaut pour les nouveaux objets,
- quadrillage, si vérifié, une grille est affichée dans tous les documents,
- détachement (calage) de la grille dans tous les documents,
- espacement de la grille dans tous les documents,
- retraits (décalages) par défaut pour les nouveaux objets,
- mode auteur ou mode lecteur par défaut,
- espacement de ligne par défaut pour les nouveaux objets,
- style de ligne par défaut pour les nouveaux objets,
- verrouillage de l'écran, si vérifié, l'éditeur ne remet pas à jour l'écran,
- géométrie de la fenêtre de la boîte de message,
- géométrie de la fenêtre du sélecteur de couleur,
- nombre de côtés par défaut pour les nouveaux polygones,
- si vérifié, la règle de format est affichée dans tous les documents,
- taille d'une page par défaut pour les nouveaux documents,
- espacement de la tabulation par défaut pour les nouveaux objets,
- type de tabulation par défaut pour les nouveaux objets,
- alignement (cadrage) du texte par défaut pour les nouveaux objets,
- unités en pouces ou en millimètres (millimètres par défaut).

Les différents paramètres modifiables des propriétés de noeud sont les suivants :
- couleur de l'arrière-plan,
- image d'arrière-plan,
- enfants (hypermédia, parenté des noeuds),
- curseur,
- couleur du premier-plan,
- identificateur de noeud,
- modifications non prises en compte, si vérifié,
- grossissement,
- nom,
- défilement de la page,
- parent (hypermédia),
- position,
- zone sélectionnée,
- position de la zone sélectionnée,
- texte sélectionné,
- position du texte sélectionné,
- sélection,
- taille,
- type (hypermédia), si vérifié, noeud,
- identificateur de fenêtre.

Les différents paramètres modifiables des propriétés concernant les textes sont les suivants :
- identificateur d'ancre (hypermédia), valeur zéro par défaut ou valeur de l'identificateur d'ancre si l'objet est actif,
- couleur de l'arrière-plan,
- image d'arrière-plan,
- lignes de base,
- enfants (hypermédia), liste des zones sensibles de texte,
- objet modifiable,
- liste de fontes,
- couleur du premier-plan,
- mise en évidence (surbrillance) d'une zone du texte sur l'écran quand le curseur entre dans cette zone,
- identificateur de texte,
- retraits (décalages),
- couche,
- nom,
- parent (hypermédia),
- position,
- défilement,
- monoligne,
- taille,
- espacement de ligne,
- espacement de tabulation,
- type de tabulation,
- texte,
- alignement (cadrage) du texte,
- débordement d'un texte,
- position supérieure,
- type, si vérifié, texte,
- coordonnées des points supérieur gauche et inférieur droit du texte sur l'écran,
- visualisation de l'objet, si vérifié, l'objet est visible,
- retour à la ligne automatique.

Les différents paramètres modifiables des propriétés concernant les images sont les suivants :
- identificateur d'ancre (hypermédia), valeur zéro par défaut ou valeur de l'identificateur d'ancre si l'objet est actif,
- couleur de l'arrière-plan,
- image d'arrière-plan,
- enfants (hypermédia), liste des zones sensibles dans les images,
- nom du fichier contenant l'image,
- couleur du premier-plan,
- mise en évidence (surbrillance) d'une zone de l'image sur l'écran quand le curseur entre dans cette zone,
- identificateur d'image,
- couche,
- nom,
- parent (hypermédia),
- position,
- taille,
- type (hypermédia), si vérifié, image,
- coordonnées des points supérieur gauche et inférieur droit de l'image sur l'écran,
- visualisation de l'objet, si vérifié, l'objet est visible.

Les différents paramètres modifiables des propriétés concernant les graphiques sont les suivants :
- identificateur d'ancre (hypermédia), valeur zéro par défaut ou valeur de l'identificateur d'ancre si l'objet est actif,
- couleur de l'arrière-plan,
- image d'arrière-plan,
- couleur du premier plan,
- mise en évidence (surbrillance) d'une zone du graphique sur l'écran quand le curseur entre dans cette zone,
- identificateur du graphique,
- couche,
- style de ligne,
- nom,
- parent (hypermédia),
- position,
- taille,
- type (hypermédia), si vérifié, graphique (ligne, cercle, "camembert", ...),
- coordonnées des points supérieur gauche et inférieur droit du graphique sur l'écran,
- visualisation de l'objet, si vérifié, l'objet est visible.

Les différents paramètres des propriétés concernant les compositions d'objets modifiables sont les suivants :
- identificateur d'ancre (hypermédia), valeur zéro par défaut ou valeur de l'identificateur d'ancre si l'objet est actif,
- enfants (hypermédia),
- identificateur de groupe,
- couche,
- nom,
- parent (hypermédia),
- position,
- taille,
- type (hypermédia), si vérifié, groupe,
- visualisation de l'objet, si vérifié, l'objet est visible.

Les différents paramètres modifiables des propriétés concernant les boutons sont les suivants :
- identificateur d'ancre (hypermédia), valeur de l'identificateur d'ancre,
- couleur du bouton de validation,
- affichage du bouton de validation,
- couleur de l'arrière-plan,
- image d'arrière-plan,
- remplissage du bouton après validation,
- remplissage du bouton après sélection,
- liste des fontes,
- couleur du premier plan,
- mise en évidence (surbrillance) du bouton sur l'écran quand le curseur entre dans cette zone,
- identificateur du bouton,
- jeu de boutons,
- affichage du libellé,
- chaîne du libellé,
- type de libellé,
- couche,
- nom,
- parent (hypermédia),
- position,
- sélection de couleur,
- affichage par défaut,
- taille,
- type (hypermédia), si vérifié, bouton-poussoir, bouton audio ou bouton de contrôle,
- coordonnées des points supérieur gauche et inférieur droit du bouton sur l'écran,
- visualisation de l'objet, si vérifié, le bouton est visible.

Les différents paramètres modifiables des propriétés concernant les curseurs de potentiomètre sont les suivants :
- identificateur d'ancre (hypermédia), valeur de l'identificateur d'ancre,
- couleur de l'arrière-plan,
- image d'arrière-plan,
- liste des fontes,
- couleur du premier-plan,
- mise en évidence (surbrillance) du curseur sur l'écran quand le curseur entre dans cette zone,
- identificateur de curseur,
- couche,
- maximum de la position du curseur,
- minimum de la position du curseur,
- nom,
- parent (hypermédia),
- position,
- affichage touches de commande du curseur,
- taille,
- taille du curseur,
- type (hypermédia),
- valeur,
- coordonnées des points supérieur gauche et inférieur droit du curseur sur l'écran,
- visualisation de l'objet, si vérifié, le curseur est visible.

Les différents paramètres modifiables des propriétés concernant les réglettes graduées sont les suivants :
- identificateur d'ancre (hypermédia), valeur de l'identificateur d'ancre,
- couleur de l'arrière-plan,
- image d'arrière-plan,
- virgules décimales,
- liste des fontes,
- couleur du premier-plan,
- mise en évidence (surbrillance) des graduations sur l'écran quand le curseur entre dans cette zone,
- identificateur de réglette graduée,
- couche,
- maximum de la position de la réglette graduée,
- minimum de la position de la réglette graduée,
- nom,
- parent (hypermédia),
- position,
- hauteur de la réglette graduée,
- largeur de la réglette graduée,
- affichage des valeurs de réglette graduée,
- taille,
- taille du curseur,
- chaîne du titre,
- type (hypermédia),
- valeur de la réglette graduée,
- coordonnées des points supérieur gauche et inférieur droit des graduations sur l'écran,
- visualisation de l'objet, si vérifié, les graduations sont visibles.

Les différents paramètres modifiables des propriétés concernant l'audio sont les suivants :
- identificateur d'ancre (hypermédia), valeur zéro par défaut ou valeur de l'identificateur d'ancre si l'objet est actif,
- couleur du bouton de validation,
- affichage du bouton de validation,
- couleur de l'arrière-plan,
- image d'arrière-plan,
- réglage des basses,
- enfants (hypermédia),
- séquence courante,
- durée, séquences en millisecondes,
- nom du fichier audio,
- remplissage après validation,
- remplissage après sélection,
- première séquence, décalage de la séquence audio en millisecondes,
- liste des fontes,
- couleur du premier-plan,
- mise en évidence (surbrillance) sur l'écran quand le curseur entre dans cette zone,
- identificateur audio,
- affichage du libellé,
- chaîne du libellé,
- type du libellé,
- dernière séquence, décalage de fin de séquence en millisecondes,
- couche,
- bouclage, si vérifié, répétition continuelle,
- nom,
- parent (hypermédia),
- position,
- sélection de couleur,
- taille,
- stéréo,
- réglage tonalités,
- réglage des aigus,
- type (hypermédia)
- coordonnées des points supérieur gauche et inférieur droit sur l'écran,
- visualisation de l'objet, si vérifié, l'objet est visible,
- réglage volume audio.

Les différents paramètres modifiables des propriétés concernant les animations et la vidéo sont les suivants :
- identificateur d'ancre (hypermédia), valeur zéro par défaut ou valeur de l'identificateur d'ancre, si l'objet est actif,
- couleur de l'arrière-plan,
- image d'arrière-plan,
- réglage luminosité,
- enfants (hypermédia), liste des "cibles",
- réglage contraste,
- trame courante,
- durée en nombre de trames,
- nom du fichier contenant l'animation,
- première trame de la séquence vidéo,
- couleur du premier-plan,
- réglage des nuances (teintes),
- identificateur animation et vidéo,
- dernière trame de la séquence vidéo,
- couche,
- bouclage, si vérifié, répétition continuelle,
- nom,
- parent (hypermédia),
- position,
- réglage de couleur (saturation),
- réglage de netteté des contours,
- taille,
- type et standard vidéo (PAL, CVBS,...),
- réglage des tonalités,
- type (hypermédia), animation ou vidéo,
- coordonnées des points supérieur gauche et inférieur droit sur l'écran,
- visualisation, si vérifié, l'objet est visible,
- réglage volume de l'audio.

Les différents paramètres modifiables des propriétés concernant les zones sensibles de texte sont les suivants :
- identificateur d'ancre (hypermédia), valeur de l'identificateur d'ancre,
- mise en évidence (surbrillance), vérifié si la zone sensible du texte clignote lorsque le pointeur la sélectionne,
- identificateur de zone sensible de texte,
- couche,
- nom,
- parent (hypermédia), identificateur de la partie du texte de la zone sensible,
- position, première et dernière positions de caractère dans le texte de la zone sensible,
- texte contenu dans la zone sensible,
- type (hypermédia), zone sensible du texte,
- coordonnées des points supérieur gauche et inférieur droit sur l'écran,
- visualisation, vérifié si l'objet est visible.

Les différents paramètres modifiables des propriétés concernant les zones sensibles dans les images sont les suivants :
- identificateur de l'ancre (hypermédia), valeur de l'identificateur d'ancre,
- mise en évidence (surbrillance), vérifié si la zone sensible de l'image clignote lorsque le pointeur la sélectionne,
- identificateur de zone sensible d'image,
- couche,
- nom,
- parent (hypermédia), identificateur de l'image,
- taille de la zone sensible dans l'image,
- type (hypermédia), zone sensible d'image,
- coordonnées des points supérieur gauche et inférieur droit sur l'écran,
- visualisation de l'objet, si vérifié, l'objet est visible.

Les différents paramètres modifiables des propriétés concernant les "cibles" sont les suivants :
- identificateur de l'ancre (hypermédia), valeur de l'identification d'ancre,
- première trame de la cible,
- mise en évidence (surbrillance), vérifié si la zone sensible clignote lorsque le pointeur la sélectionne,
- identificateur de la cible,
- dernière trame de la cible,
- couche,
- nom,
- parent (hypermédia), identificateur de l'animation,
- position de la cible dans la fenêtre d'animation,
- taille de la cible,
- type (hypermédia), zone sensible,
- coordonnées des points supérieur gauche et inférieur droit sur l'écran,
- visualisation de l'objet, si vérifié, l'objet est visible.

Pour conclure, l'utilisation du protocole bidirectionnel de très haut niveau décrit ci-avant procure une multitude d'avantages. En particulier, elle permet de développer des applications multimédia interactives en supprimant les difficultés de programmation liées à ce type de développement. En effet, grâce au très haut niveau du protocole de communication, il est aisé de concevoir une interface utilisateur multimédia pour une autre application ou de créer une application autonome présentant des informations utilisant du texte, des graphiques, des animations, du son et de la vidéo. Des applications complexes peuvent être réalisées dans un temps réduit pour intégrer de nouveaux éditeurs dans le système hypermédia ou ajouter des fonctionnalités à un éditeur, l'ensemble pouvant travailler dans un environnement distribué. Le système hypermédia est ouvert, car le protocole de communication autorise la gestion des documents par une pluralité d'éditeurs liés ensemble et communiquant dans l'hyperstructure constituée. En outre, le protocole peut lui-même être étendu sans difficulté.

## Revendications

1. Utilisation d'un protocole bidirectionnel de très haut niveau pour la communication entre un système hypermédia et une pluralité d'éditeurs interconnectés communiquant dans une hyperstructure, protocole utilisant un jeu de messages permettant à chaque éditeur de manipuler et gérer les contenus d'objets hypermédia appelés noeuds alors que, ledit protocole est manipulé par les objets hypermédia et est accessible à travers une interface programmatique.

2. Utilisation d'un protocole selon la revendication 1, basé sur le principe d'un protocole de gestion de la transmission du type TCP/IP.

3. Utilisation du protocole selon la revendication 1 ou 2 caractérisé en ce que ce dernier utilise principalement un jeu de cinq types de messages tels que :
- des messages de requêtes, émis par le système hypermédia lorsqu'une quelconque action doit être exécutée par un éditeur,
- des messages de réponses, émis par les éditeurs répondant à un message de requête,
- des messages événementiels, émis par les éditeurs pour informer le système hypermédia de la survenance de divers événements,
- des messages de menu, émis par les éditeurs pour informer le système hypermédia de la sélection par un utilisateur d'un menu prédéfini,
- des messages d'erreurs, émis par les éditeurs lors de l'apparition d'une erreur.

4. Utilisation du protocole selon la revendication 3, caractérisée en ce qu'elle permet entre autres, de créer une zone sensible dans un noeud qui correspond à un document multimédia selon les étapes suivantes :
a. l'utilisateur indique les repères d'une région du document choisie comme zone sensible, b. l'éditeur envoie au système hypermédia un message de menu propre à la création d'une ancre qui est un objet hypermédia représentant une zone sensible du contenu d'un noeud,
c. le système hypermédia crée alors une ancre et envoie à l'éditeur un message de requête de création d'une ancre,
d. si l'éditeur reçoit un message de requête valide de création d'ancre, il met à jour son contenu pour inclure l'ancre créée.

5. Utilisation du protocole selon la revendication 4, caractérisée en ce qu'elle permet entre autres, au système hypermédia de créer une ancre sans intervention directe d'un utilisateur selon les étapes c et d de la revendication 4.

6. Utilisation du protocole selon la revendication 3, caractérisée en ce qu'elle permet entre autres, de supprimer une ancre qui est un objet hypermédia représentant une zone sensible du contenu d'un noeud selon les étapes suivantes :
a. l'utilisateur sélectionne la zone sensible à supprimer,
b. l'éditeur envoie au système hypermédia un message de menu propre à la suppression d'une ancre,
c. le système hypermédia supprime l'ancre et envoie à l'éditeur un message de requête de suppression d'ancre,
d. l'éditeur qui reçoit le message de requête de suppression d'ancre supprime l'objet correspondant du document.

7. Utilisation du protocole selon la revendication 6, caractérisée en ce qu'elle permet entre autres, au système hypermédia de supprimer une ancre sans intervention directe d'un utilisateur selon les étapes c et d de la revendication 6.
